# EUROPÄISCHE PATENTSCHRIFT

(11) **EP 0 493 681 B1**
(45) Veröffentlichungstag und Bekanntmachung des Hinweises auf die Patenterteilung: **17.08.1994**
(21) Anmeldenummer: 91120345.3
(22) Anmeldetag: 28.11.1991
(51) Int. Cl.: F16B 21/16, F16B 2/14, E04F 13/08

(54) **Vorrichtung zum Verankern von Wandplatten an einem Verankerungsgrund**
Device for anchoring panels to a support
Dispositif pour l'ancrage de panneaux à un support

(30) Priorität: 03.01.1991 DE 4100041
(43) Veröffentlichungstag der Anmeldung: 08.07.1992
(73) Patentinhaber: LUTZ ANKERSYSTEME GmbH & CO. KG, D-97877 Wertheim (DE)
(72) Erfinder: Kettner, Richard, D-6980 Wetheim (DE)
(74) Vertreter: Geitz, Heinrich, Dr.-Ing.

(56) Entgegenhaltungen:
- EP-A- 0 086 329
- DE-U- 8 902 402
- US-A- 1 742 689

## Beschreibung

Die Erfindung bezieht sich auf eine Vorrichtung zum Verankern von Wandplatten an und im Abstand von einem Verankerungsgrund, mit einem am Verankerungsgrund befestigbaren Tragelement und einem von diesem vorstehenden Tragarm, der aus einem Aufnahmeteil und einem an diesem axialfest, aber einstellbar aufgenommenen Anschlußteil mit einem Querprofilierungen aufweisenden Bereich besteht.

Zum Verankern von Wandplatten dienende Vorrichtungen dieser Art sind bereits in Form von Trag- und Halteankern bekannt. Derartige Anker können an beliebiger Stelle der Ausdehnung der zu verankernden Wandplatten angreifen. Bei diesen Ankern handelt es sich in aller Regel um solche mit einer an einem - bei bestimmungsgemäßer Verwendung in der Einbaulage - vom Verankerungsgrund vorstehenden Ankerteil fest angeordneten Mutter, in die eine Gewindestange einschraubbar ist, mit deren vorstehendem Ende in hier im einzelnen nicht interessierender Weise die zu verankernde Wandplatte verbunden wird.

Ein Anker dieser Art und Zweckbestimmung ist in dem DE-Gebrauchsmuster 89 02 402 beschrieben. Dabei handelt es sich um einen andübelbaren Traganker für Naturstein-Wandplatten mit einem aus einem U-förmigen Bügel mit untenliegendem Steg und einer in diesem aufgenommenen Gewindestange bestehenden Tragarm. Die Gewindestange ist in ein in Ausklinkungen des Bügels aufgenommenes Mutterteil eingeschraubt. Eine Abstandseinstellung gelingt bei diesem vorbekannten Anker durch mehr oder weniger tiefes Einschrauben der Gewindestange in das Mutterteil.

Durch die Erfindung soll dieser vorbekannte Anker im Hinblick auf kostengünstigere Herstellbarkeit und auf einfachere Handhabbarkeit verbessert werden.

Diese Aufgabe ist, ausgehend vom oben beschriebenen Stande der Technik, dadurch gelöst, daß bei der Vorrichtung nach dem Oberbegriff des Patentanspruchs 1 aus dem Aufnahmeteil ein von diesem partiell vorstehender Abschnitt herausgeprägt ist und daß das Anschlußteil mit seinem Querprofilierungen aufweisenden Bereich mittels eines lösbaren Spannelements formschlüssig fest an den aus dem Aufnahmeteil herausgeprägten Abschnitt des Aufnahmeteils angepreßt wird.

Während beim Stande der Technik es eines mit einem Bauelement des Ankers verbundenen Mutterteils bedurfte, indem eine Gewindestange mehr oder weniger tief einschraubbar aufgenommen ist, handelt es sich bei der Erfindung darum, daß aus einem das Anschlußteil aufnehmenden Ankerelement ein Abschnitt herausgeprägt ist und das Anschlußteil mit einem Querprofilierungen aufweisenden Bereich in solcher Weise an den aus dem Aufnahmeteil herausgeprägten Abschnitt fest angepreßt wird, daß die Querprofilierungen in den herausgeprägten Abschnitt formschlüssig eingreifen und daher eine feste Halterung gewährleistet ist.

Eine derartige Ausprägung aus dem Aufnahmeteil ist einfach und kostengünstig herstellbar und ermöglicht darüber hinaus bei gelöstem Spannelement eine einfache Einstellbarkeit des Anschlußteils, indem dieses ohne Eingriff in den aus dem Aufnahmeteil herausgeprägten Abschnitt in Richtung seiner Längserstreckung verschoben und danach mittels des Spannelementes wieder an diesen Abschnitt fest angepreßt wird, wobei die Querprofilierungen des Anschlußteils in den aus dem Anschlußteil herausgeprägten Abschnitt eingreifen und mithin eine formschlüssig feste Verbindung des Anschlußteils mit dem Aufnahmeteil eintritt.

Aus der EP-A-0 086 329 ist zwar auch schon eine Haltevorrichtung für abstandsmäßig feststellbare Bauwerksbekleidungen vorbekannt, die einen an einer Bauwerkswand befestigbaren Tragschenkel und einen davon rechtwinklig abstehenden, mit dem Tragschenkel verbundenen Tragarm aufweist, aber diese Haltevorrichtung kann keine Anregung für die Verankerungsvorrichtung nach der Erfindung geben.

Bei der vorbekannten Haltevorrichtung ist der Tragarm als drehbarer und an seinem Umfang mit über letzteren vorspringende Nocken bildenden Querrippen versehener Bolzen ausgebildet. Diese Querrippen greifen im Einsatzfalle in eine horizontale Gegenprofilierung eines am vertikal verlaufenden Tragschenkel befestigten Aufnahmeteils ein und der Bolzen ist in der gewünschten Einstellung durch ein an dem genannten Aufnahmeteil befindliches Feststellelement, das bei einer praktischen Ausführungsform als Spannschraube ausgebildet ist, mit seiner Profilierung in Eingriffslage mit der Gegenprofilierung des Aufnahmeteils gehalten und dadurch gesichert. Bei der Gegenprofilierung handelt es sich um den Lochrand einer vom Bolzen durchdrungenen Ausnehmung des Aufnahmeteils.

Während bei der vorbekannten Haltevorrichtung ein am vertikal verlaufenden Tragschenkel befestigtes Aufnahmeteil mit zumindest einer Querprofilierung vorgesehen ist, in welche die am Umfang des den Tragarm bildenden Bolzens angeordneten Querrippen eingreifen, ist bei der Erfindung lediglich ein Abschnitt aus dem Aufnahmeteil herausgeprägt, der partiell von letzterem vorsteht und in den die Gewindeprofilierung des mittels des Spannelements angepreßten Anschlußteils formschlüssig eingreift. Die Verankerungsvorrichtung nach der Erfindung unterscheidet sich mithin durch eine wesentlich vereinfachte und offensichtlich auch kostengünstigere Ausbildung, für welche die vorbekannte Haltevorrichtung keinerlei Anregung geben konnte.

Im Rahmen der vorliegenden Erfindung kann gemäß einer sinnvollen Weiterbildung der aus dem Aufnahmeteil herausgeprägte Abschnitt eine zu der Profilierung des Anschlußteils komplementäre Querprofilierung aufweisen, in die bei bestimmungsgemäßer Verwendung der Ankervorrichtung die Profilierung des Anschlußteils formschlüssig eingreift.

In weiterer Ausgestaltung der Erfindung ist der mit dem aus dem Aufnahmeteil herausgeformte Abschnitt zusammenwirkende Bereich des Anschlußteils als Gewindegestänge ausgebildet und demgemäß der genannte Abschnitt des Aufnahmeteils mit einer Gewindeprofilierung versehen.

Während bei einer durchaus möglichen Ausbildung des Anschlußteils beispielsweise als Flachmaterialstreifen mit einseitiger Querprofilierung eine stufenweise Einstellung des Anschlußteils im Rahmen der Teilung der genannten Querprofilierung möglich ist, gelingt bei einer Gewindestange eine stufenlose Einstellung in einfacher Weise durch Drehung des Anschlußteils, wobei die Gewindestange mehr oder weniger tief eingeschraubt wird. Gleichwohl kann auch durch lösen des Spannelements die Querprofilierung des Anschlußteils außer Eingriff mit dem aus dem Aufnahmeteil herausgeformten Abschnitt gebracht und das Anschlußteil um ein mehr oder weniger großes Maß gegenüber dem Aufnahmeteil verschoben und dann durch Wiederanziehen des Spannelementes axial festgelegt werden.

Bei einer anderen wichtigen Ausbildung der Erfindung handelt es sich bei dem Aufnahmeteil um einen U-förmigen Bügel mit - in der Einbaulage - nach unten weisendem Steg, aus dem der mit dem Anschlußteil formschlüssig zusammenwirkende Abschnitt in den vom Steg und den sich daran anschließenden Schenkeln gebildeten Innenraum hineingeformt ist, wobei in diesem Innenraum das Anschlußteil aufgenommen wird. Bei dieser Ausgestaltung hat es sich als zweckmäßig erwiesen, wenn als Spannelement zur Vermittlung eines - lösbaren - formschlüssigen Zusammenwirkens der Profilierungen des Aufnahmeteils und des Anschlußteils ein Querkeil dient, der auf der von den Querprofilierungen des Aufnahmeteils abgewandten Seite am Anschlußteil angreift.

Der Querkeil kann mittels Selbsthemmung in der Spannlage gehalten sein oder auch mittels einer auf einen Gewindeabschnitt, der sich vom verjüngten Ende des Querkeils forterstreckt, aufgeschraubten Mutter.

Ein besonders einfacher Aufbau der Verankerungsvorrichtung ergibt sich, wenn das Anschlußteil einen Gewindebolzen umfaßt und es sich bei den Querprofilierungen des aus dem Steg des Aufnahmeteils herausgeformten Abschnittes um Gewindeprofilierungen handelt. Der Gewindebolzen ist dann im Innenraum des Aufnahmeteils aufgenommen und mittels des als Spannelement dienenden Querkeils mit seinem Außengewinde in formschlüssigem Eingriff mit der Gewindeprofilierung des aus dem Steg des U-förmigen Bügels herausgeformten Abschnittes gehalten. Die Abstandseinstellung kann in einfacher Weise durch Lösen des Querkeils und Verschieben des Gewindebolzens in seiner Aufnahme geschehen oder aber als Feineinstellung durch mehr oder weniger tiefes Einschrauben infolge Drehung um seine Längsachse.

Anhand der beigefügten Zeichnung soll nachstehend eine Ausführungsform der erfindungsgemäßen Vorrichtung zum Verankern von Wandplatten an und im Abstand vor einem Verankerungsgrund erläutert werden. In schematischen Ansichten zeigen:
- Fig. 1: einen für die Verankerungen von Fassadenplatten aus Naturstein bestimmten Anker in perspektivischer Darstellung,
- Fig. 2: in einer ausschnittsweisen Längsschnittansicht den Anker gemäß Fig. 1 in der Montagelage an einem nicht dargestellten Verankerungsgrund mit einer - strichpunktiert angedeuteten - Natursteinplatte,
- Fig. 3: einen Querschnitt gemäß der Schnittlinie III-III in Fig. 2 durch einen in der Montagelage im wesentlichen rechtwinklig vom Verankerungsgrund vorstehenden Tragarm und
- Fig. 4: in einer Ansicht wie in Fig. 3 eine abgewandelte Ausführungsform mit einem mittels einer auf einen Gewindeabschnitt aufgeschraubten Mutter in der Spannlage gesicherten Querkeil.

Der in seiner Gesamtheit mit 10 bezeichnete Anker besitzt ein an einem nicht dargestellten Verankerungsgrund befestigbares Tragelement 11 in Gestalt eines U-förmigen Bügels mit - in der Einbaulage - nach oben weisendem Steg 12 und zwei sich von diesem parallel zueinander forterstreckenden Schenkeln 13, 13′ und einen vom Tragelement vorstehenden Tragarm 15, der aus einem ebenfalls U-förmigen Bügel 16 mit zwei durch einen - in der Einbaulage - nach unten weisenden Steg 17 miteinander verbundenen Schenkeln 18, 18′ und einem Anschlußteil 20 besteht.

Der vom Tragelement 11 vorstehende Bügel 16 ist mit seinen Schenkeln 18, 18′ zwischen den Schenkeln 13, 13′ des Tragelements 11 im Abstand von dem diese Schenkel miteinander verbindenden Steg 12 aufgenommen. Miteinander verbunden sind die beiden Bügel 11, 16 mittels zweier im Abstand voneinander angeordneter Bolzen 22, 22′, die sich durch Lochungen in den Schenkeln 13, 13′ und 18, 18′ der beiden Bügel hindurcherstrecken und deren Enden außenseitig von den Schenkeln des am Verankerungsgrund befestigbaren Bügels 11 angestaucht sind. Quer zur Erstreckung der Schenkel weist der Bügel 16 des Tragarms 15, dessen Steg 17 in der Montagelage unten liegt, eine beträchtlich größere Länge auf als der am Verankerungsgrund befestigbare Bügel 11 und steht über diesen auf einer Stirnseite vor.

Bei bestimmungsgemäßer Verwendung des Ankers liegt der das Tragelement bildende Bügel 11 mit der vom anderen Bügel 16 abgewandten Stirnseite am - nicht dargestellten - Verankerungsgrund an und ist an diesen mittels einer - ebenfalls nicht dargestellten - Dübelschraube gehalten, die sich über dem vorstehenden Bügel 16 zwischen den Schenkeln 13, 13′ des das Tragelement bildenden Bügels 11 hindurcherstreckt und einen die genannten Schenkel auf der vom Verankerungsgrund abgewandten Seite übergreifenden Querriegel , der nicht gezeigt ist, an das Tragelement und damit letzteres an den Verankerungsgrund anpreßt. Auf der bei bestimmungsgemäßer Verwendung am Verankerungsgrund anliegenden Seite sind die Schenkel 13, 13′ des Tragelements 11 mit je einer sich nahezu über deren gesamte Länge erstreckenden Ausklinkung 23 versehen, die der Aufnahme einer - nicht gezeigten - Keilscheibe dient. Diese Keilscheibe, die in hier nicht weiter interessierender Weise eine Höheneinstellung des Tragelements 11 und damit des gesamten Ankers ermöglicht, ist quer zur Dübelschraube verschiebbar und erstreckt sich in der Einbaulage zwischen den dem Steg des Tragelements benachbarten Begrenzungen der Ausklinkung und der nicht veranschaulichten Dübelschraube.

Der vom Tragelement vorstehende U-förmige Bügel 16 bildet zusammen mit einem Anschlußteil 20 den bei bestimmungsgemäßer Verwendung des Ankers 10 im wesentlichen rechtwinklig vom Verankerungsgrund vorstehenden Tragarm 15. Das Anschlußteil 20 besitzt eine Gewindestange 25, die im Bereich zwischen dem Steg 17 und den von letzterem - in der Montagelage - nach oben vorstehenden Schenkeln 18, 18′ des Bügels 16 aufgenommen ist. Aus dem - in der Montagelage - untenliegenden Steg 17 des zum Tragarm 15 gehörenden U-förmigen Bügels 16 ist im Abstand von der vom Tragelement abgewandten Stirnkante 26 des genannten Bügels ein Abschnitt 27 in das von diesem Bügel gebildeten U-Profil hineingeformt und mit einer Gewindeprofilierung versehen, in die das Außengewinde der Gewindestange 25 eingreift. Gehalten ist die Gewindestange 25 in der in die Gewindeprofilierung des aus dem Steg 17 des genannten Bügels 16 herausgeformten Abschnittes 27 durch einen oberseitig an der Gewindestange angreifenden Querkeil 28, der in Ausklinkungen 29, 29′ in den nach oben vorstehenden Schenkeln 18, 18′ des zum Tragarm 15 gehörenden U-förmigen Bügels 16 aufgenommen ist. Diese Ausklinkungen sind zwischen der vom Tragelement 11 abgewandten Stirnseite 26 des Bügels 16 und dem aus dem Steg 17 herausgeformten Gewindeabschnitt 27 angeordnet und reichen bis unter eine die in dem Bügel aufgenommene Gewindestange 25 tangierende Querebene.

Von dem einen Bestandteil des Tragarms 15 bildenden Bügel 16 abgewandten Ende der Gewindestange 25 erstreckt sich koaxial zu dieser ein Gewindebolzen 30 mit gegenüber der Gewindestange reduziertem Querschnitt fort, auf dem eine Widerlagerscheibe 31 und ein Puffer 32 aus elastisch nachgiebigem Material, wie Neopren, auf der von der Gewindestange abgewandten Seite aufgenommen sind. Schließlich gehören zum Anschlußteil 20 auch eine auf den von der Gewindestange 25 vorstehenden Schraubenbolzen 30 aufschraubbare Kegelmutter 33 und eine Kegelscheibe 34 aus Kunststoff. Das Anschlußteil 20 bildet somit einen Schraubankerkopf.

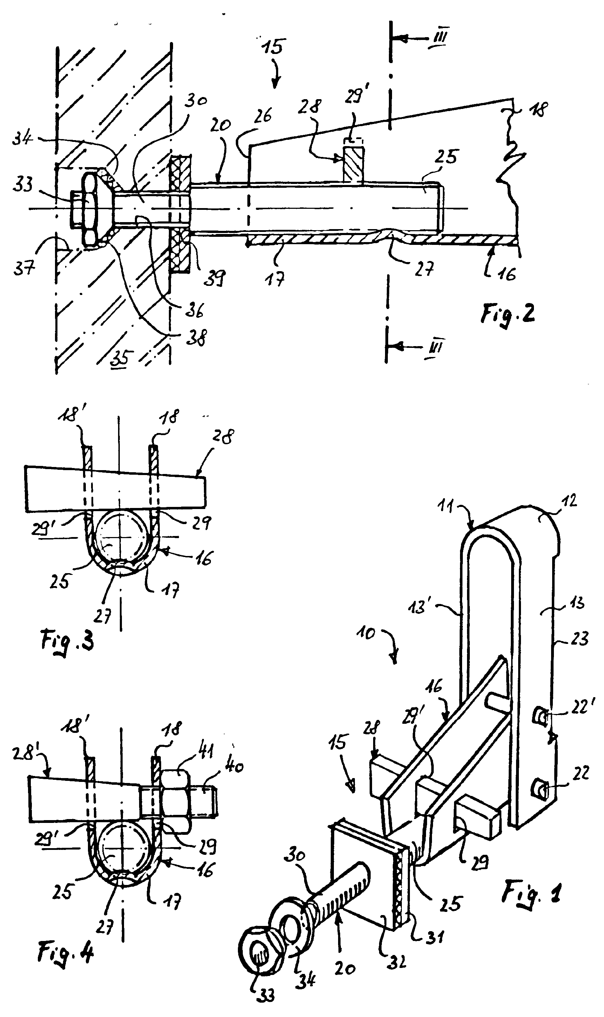

Wie insbesondere die Fig. 2 und 3 zeigen, liegt die Gewindestange 25 des Anschlußteils 20 innenseitig am Steg 17 des vom Tragelement 11 vorstehenden U-förmigen Bügels 16 an und ist zwischen den hochstehenden Schenkeln 18, 18′ dieses Bügels aufgenommen. Angesichts des oberseitig an der Gewindestange 25 angreifenden Querkeils 28 stehen die Gewindeprofilierungen der Gewindestange 25 und des aus dem Steg 17 des genannten Bügels 16 herausgeformten Abschnittes 27 in Eingriff miteinander und dadurch ist das Anschlußteil 20 in Bezug auf den genannten Bügel 16 axialfest gehalten.

In Fig. 2 ist die Verankerung einer nur strichpunktiert angedeuteten Natursteinplatte 35 gezeigt. Der von der Gewindestange 25 des Anschlußteils 20 vorstehende Gewindebolzen 30 greift in eine Bohrung 36 ein, die sich durch die Natursteinplatte hindurcherstreckt, und ragt bis in eine koaxial zu dieser Bohrung verlaufende Einsenkung 37, die sich von der vom Anker entfernten Sichtseite der Natursteinplatte 35 aus diese hineinerstreckt und in einer etwa der halben Plattenstärke entsprechenden Tiefe von einer einen Innenkonus bildenden Schulter 38 begrenzt ist. Innerhalb dieser Einsenkung ist die auf dem Gewindebolzen 30 aufgeschraubte Kegelmutter 33 unter ZwischenTage der aus Kunststoff bestehenden Kegelscheibe 34 aufgenommen und gegenüber der konischen Schulter 38 verspannt. Das ankerseitige Widerlager für die Wandplatte bildet die auf dem Gewindebolzen 30 aufgenommene Vierkantscheibe 31 mit dem plattenseitigen Puffer 32 aus Neopren oder einem anderen elastisch verformbaren Material. Die Vierkantscheibe 31 stützt sich an der von dem Querschnittssprung zwischen der Gewindestange 25 und dem Gewindebolzen 30 gebildeten Schulter 39 axial ab.

Der erfindungsgemäße Anker 10 ermöglicht in einfacher Weise eine unproblematische Abstandseinstellung der zu verankernden Fassadenplatten 35 vom Verankerungsgrund, indem die Gewindestange 25 mehr oder weniger tief eingreifend in den zum Tragarm 15 gehörenden U-förmigen Bügel 16 festgelegt ist. Die axiale Festlegung der Gewindestange 25 in Bezug auf den genannten Bügel 16 gelingt bei nicht in Eingriff stehenden Gewindeprofilierungen der Gewindestange einerseits und des aus dem Steg 17 dieses Bügels herausgeformten Abschnittes 27 andererseits, also bei noch nicht eingesetztem oder gelöstem Querkeil 28′, indem das Anschlußteil 20 in Richtung der Längserstreckung dieses Bügels verschoben und dann nach erfolgter Abstandseinstellung die Gewindeprofilierung der Gewindestange 25 durch Einschlagen des Querkeils 28 in Eingriffslage mit der Gewindeprofilierung des aus dem Steg 17 dieses Bügels hochgeformten Abschnittes 27 gebracht wird. Bei nur leicht gelöstem Querkeil 28 kann die Gewindestange 25 auch durch Drehung des Anschlußteils 20 um seine Längsachse mehr oder weniger tief in den Bügel 16 des Tragarms 15 eingeschraubt und dann durch Anziehen des Querkeils nach erfolgter Einstellung festgelegt werden.

Bei dem als Ausführungsbeispiel veranschaulichten Anker 10 handelt es sich um einen Traganker, der neben seiner Tragfunktion auch Haltefunktionen erfüllt. Der das Tragelement 11 bildende Bügel und der zum Tragarm gehörende Bügel 16 sind mittels der im Abstand voneinander angeordneten und die Bügelschenkel 13, 13′ und 18, 18′ durchdringenden Bolzen 22, 22′ zug- und druckfest sowie drehstarr miteinander verbunden. Bei in Spannlage eingeschlagenem Querkeil 28 ist auch das Anschlußteil 20 zug- und druckfest sowie momentensteif mit dem vom Tragelement 11 vorstehenden Bügel 16 des Tragarms 15 verbunden. Aus Traglast herrührende Momente werden dadurch aufgefangen, daß die in dem vorstehenden Abschnitt des zum Tragarm 15 gehörenden Bügels 16 aufgenommene Gewindestange 25 in der Einbaulage sich am untenliegenden Steg 17 dieses Bügels abstützt und mittels des - in der Einbaulage - oberseitig an der Gewindestange angreifenden Querkeils 28 in dieser Lage gehalten ist.

Bei der alternativen Ausführungsform nach Fig. 4 erstreckt sich vom verjüngten Ende des Querkeils 28′ ein Gewindeabschnitt 40 fort und durch die eine Aufnahmeausklinkung 29′ hindurch. Auf den vom Schenkel 18 des Aufnahmeteils 16 vorstehenden Teil dieses Gewindeabschnitts 40 ist eine Mutter 41 aufgeschraubt, die den Querkeil in seiner Spannlage sichert.

## Patentansprüche

1. Vorrichtung zum Verankern von Wandplatten an und im Abstand von einem Verankerungsgrund, mit einem am Verankerungsgrund befestigbaren Tragelement (11) und einem von diesem vorstehenden Tragarm (15), der aus einem Aufnahmeteil (16) und einem an diesem axialfest, aber einstellbar aufgenommenen Anschlußteil (20) mit einem Querprofilierungen aufweisenden Bereich (25) besteht,
dadurch gekennzeichnet,
daß aus dem Aufnahmeteil (16) ein von diesem partiell vorstehender Abschnitt (27) herausgeprägt ist und daß das Anschlußteil (20) mit seinem Querprofilierungen aufweisenden Bereich (25) mittels eines lösbaren Spannelements (28, 28′) formschlüssig fest an den aus dem Aufnahmeteil herausgeprägten Abschnitt angepreßt wird.

2. Vorrichtung nach Anspruch 1, dadurch gekennzeichnet, daß der aus dem Aufnahmeteil (16) herausgeprägte Abschnitt (27) mit einer zu der Profilierung des Anschlußteils (20, 25) komplementären Querprofilierung versehen ist.

3. Vorrichtung nach Anspruch 1 oder 2, dadurch gekennzeichnet, daß es sich bei dem Aufnahmeteil (16) um einen U-förmigen Bügel mit - in der Einbaulage - nach unten weisendem Steg (17) handelt, aus dem der herausgeprägte Abschnitt (27) in den vom Steg und den sich daran anschließenden Schenkeln (18, 18′) gebildeten Innenraum hineingeformt ist, und daß in diesem Innenraum ein mit Querprofilierungen versehener Abschnitt (25) des Anschlußteils (20) aufgenommen und gelagert ist.

4. Vorrichtung nach Anspruch 3, dadurch gekennzeichnet, daß als Spannelement zur Vermittlung eines - lösbaren - formschlüssigen Zusammenwirkens der Querprofilierungen des Aufnahmeteils (16) und des Anschlußteils (20, 25) ein Querkeil (28, 28′) dient, der auf der von den Querprofilierungen des Aufnahmeteils abgewandten Seite am Anschlußteil angreift.

5. Vorrichtung nach Anspruch 4, dadurch gekennzeichnet, daß der Querkeil (28′) mit einem sich von seinem verjüngten Ende forterstreckenden Gewindeabschnitt (40) versehen und in der Spannlage mittels einer auf den seitlich von dem das Aufnahmeteil (16) bildenden U-förmigen Bügel vorstehenden Teil dieses Gewindeabschnittes aufgeschraubten Mutter (41) gesichert ist.

6. Vorrichtung nach Anspruch 4 oder 5, dadurch gekennzeichnet, daß es sich bei dem im Aufnahmeteil (16) gelagerten Bereich des Anschlußteils (20) um einen Gewindebolzen (25) handelt und daß die Querprofilierungen des aus dem Steg (17) des Aufnahmeteils herausgeformten Abschnittes (27) als Gewindesegmente ausgebildet sind.

## Claims

1. Device for the anchoring of wall panels to and at a spacing from an anchoring support, with a carrier element (11) fastenable to the anchoring support and a carrier arm (15), which projects from the carrier element and consists of a receptacle part (16) and a connector part (20) which is received at this to be axially fast but adjustable, with a region (25) having transverse profilings, characterised thereby that a portion (27) is stamped out of the receptacle part (16) to partially project therefrom and that the connector part (20) together with its region (25) having transverse profilings is pressed, by means of a releasable clamping element (28, 28′), to be shape-lockingly fast against the portion stamped out of the receptacle part.

2. Device according to claim 1, characterised thereby that the portion (27) stamped out of the receptacle part (16) is provided with a transverse profiling complementary to the profiling of the connector part (20, 25).

3. Device according to claim 1 or 2, characterised thereby that in the case of the receptacle part (16) there is concerned a U-shaped bracket with - in the installed position - a downwardly facing web (17), from which the stamped-out portion (27) is deformed into the interior space formed by the web and the limbs (18, 18′) adjoining thereat, and that a Portion (25), which is provided with transverse profilings, of the connector part (20) is received and mounted in this interior space.

4. Device according to claim 3, characterised thereby that a cross key (28, 28′), which engages at the connector part at the side remote from the transverse profilings of the receptacle part, serves as clamping element for the bringing about of a - releasable - shape-locking co-operation of the transverse profilings of the receptacle part (16) and the connector part (20, 25).

5. Device according to claim 4, characterised thereby that the cross key (28′) is provided with a threaded portion (40) continuing from its tapered end and is secured in the clamping position by means of a nut (41) screwed onto the part, which projects laterally from the U-shaped bracket forming the receptacle part (16), of this threaded portion.

6. Device according to claim 4 or 5, characterised thereby that a threaded bolt (25) is concerned in the case of the region of the connector part (20) mounted in the receptacle part (16) and that the transverse profilings of the portion (27) deformed out of the web (17) of the receptacle part are constructed as threaded segments.

## Revendications

1. Dispositif pour ancrer des carreaux muraux à un support d'ancrage et à une certaine distance de ce dernier, comportant un élément porteur (11), pouvant être fixé au support d'ancrage, et un bras porteur (15), en saillie par rapport à cet élément, lequel bras est constitué d'une pièce de logement (16) et d'une pièce de raccordement (20), logée en position axiale fixe contre cette dernière, mais en position réglable, cette dernière pièce de raccordement comportant une zone (25) présentant des profilés transversaux, caractérisé en ce qu'on réalise par emboutissage, à partir de la pièce de logement (16), un segment (27), partiellement en saillie par rapport à cette dernière, et que la pièce de raccordement (20), avec sa zone (25) comportant des profilés transversaux, est appuyée fermement, avec correspondance de forme, à l'aide d'un élément de serrage amovible (28, 28′), contre le segment obtenu par emboutissage à partir de la pièce de logement.

2. Dispositif selon la revendication 1, caractérisé en ce que le segment (27) obtenu par emboutissage à partir de la pièce de logement (16) est pourvu d'un profilé transversal complémentaire du profilé de la pièce de raccordement (20, 25).

3. Dispositif selon la revendication 1 ou 2, caractérisé en ce que, pour ce qui est de la pièce de logement (16), il s'agit d'un étrier en U comportant, en position de montage, une traverse (17) dirigée vers le bas, à partir de laquelle le segment (27), obtenu par emboutissage, est enfoncé dans l'espace intérieur formé par la traverse et les branches (18, 18′) qui s'y rattachent, et qu'un segment (25), pourvu de profilés transversaux, de la pièce de raccordement (20), est logé et installé dans cet espace intérieur.

4. Dispositif selon la revendication 3, caractérisé en ce qu'on utilise comme élément de serrage destiné à réaliser une coopération amovible et à correspondance de forme entre les profilés transversaux de la pièce de logement (16) et la pièce de raccordement (20, 25), une clavette transversale (28, 28′), qui s'applique à la pièce de raccordement, sur le côté opposé aux profilés transversaux de la pièce de logement.

5. Dispositif selon la revendication 4, caractérisé en ce que la clavette transversale (28′) est pourvue d'un segment fileté (40), qui s'étend à partir de son extrémité rétrécie, et, en position de serrage, est fixée avec un écrou (41), vissé sur la partie de ce segment fileté, en saillie latérale par rapport à l'étrier en U formant la pièce de logement (16).

6. Dispositif selon la revendication 4 ou 5, caractérisé en ce que, pour ce qui est de la zone de la pièce de raccordement (20) disposée dans la pièce de logement (16), il s'agit d'un boulon fileté (25), et que les profilés transversaux du segment (27) obtenu par déformation à partir de la traverse (27) de la pièce de logement sont constitués de segments filetés.
